# EUROPEAN PATENT SPECIFICATION

(11) **EP 3 290 736 B1**
(45) Date of publication and mention of the grant of the patent: **27.05.2020**
(21) Application number: 16785961.0
(22) Date of filing: 29.04.2016
(51) Int. Cl.: F16F 7/09, F16F 7/08, D06F 37/22

(54) **CONTROLLABLE DAMPING SHOCK ABSORBER AND WASHING MACHINE**
STOSSDÄMPFER MIT STEUERBARER DÄMPFUNGSRATE UND WASCHMASCHINE
AMORTISSEUR À AMORTISSEMENT RÉGLABLE ET MACHINE À LAVER

(30) Priority: 30.04.2015 CN 201510218889
(43) Date of publication of application: 07.03.2018
(73) Proprietor: Qingdao Haier Washing Machine Co., Ltd., Shandong 266101 (CN)
(72) Inventor: XU, Sheng, Qingdao Shandong 266101 (CN); LV, Yanfen, Qingdao Shandong 266101 (CN); PENG, Xiuwen, Qingdao Shandong 266101 (CN); XU, Liang, Qingdao Shandong 266101 (CN)
(74) Representative: Pfenning, Meinig & Partner mbB
(86) International application number: PCT/CN2016/080657
(87) International publication number: WO 2016/173533

(56) References cited:
- WO-A1-01/27375
- CN-A- 1 572 965
- CN-A- 1 621 599
- CN-A- 1 724 753
- CN-A- 1 730 781
- CN-A- 1 730 784
- DE-A1- 2 540 648
- US-A1- 2005 000 765

## Description

### TECHNICAL FIELD

The present invention relates to the field of shock absorbing apparatuses and washing machines, and more specifically, discloses a variable damping shock absorber capable of adjusting the damping of a shock absorber according to a shock condition in a use process, and a washing machine provided with the variable damping shock absorber.

### BACKGROUND

A shock absorber and an elastic element assume tasks of relieving impact and absorbing shock. When damping force is too large, it is easy to damage a connecting piece in the shock absorber, and when the damping force is too small, a shock absorbing effect cannot be realized.

The shock absorber can be applied to the washing machine. A drum washing machine is designed to absorb shock generated by a washing drum in a washing process through the washing drum made by a four-point shock absorber. Namely, the shock absorber for supporting the washing drum of the washing machine reduces the shock generated by the rotation of the washing drum through absorbing the shock, and provides holding force for supporting the washing drum, so that additional holding members such as a suspension and the like are not needed.

In the field of the washing machine, shock amplitudes generated during a normal dewatering operation and during an excessive dewatering operation under an actual washing operation are quite different. Thus, an effective attenuation for large-amplitude shock and small-amplitude shock is limited. In an existing shock absorber of the drum washing machine, shock absorbing frictional force is basically constant at all times, so change and adjustment of damping cannot be realized. If a constant damping is set, then a shock absorbing effect is poor when the shock is too large. Further relevant technologies are also known from US 2005/000765 A1 (PARK SEUNG CHUL [KR] ET AL) 6 January 2005 (2005-01-06) which relates to damper for drum type washing machine; and DE 25 40 648 A1 (VOLKSWAGENWERK AG) 17 March 1977 (1977-03-17) which relates to automotive friction damper - has piston rod moving in pressed anti-friction material lined outer pipe, with stop.

Therefore, a variable damping shock absorber and a washing machine with the shock absorber are urgently needed in a market, so that the shock absorber can automatically change the damping according to different shock conditions in an operation process, thereby effectively absorbing shock and enhancing a shock absorbing effect.

### SUMMARY

One purpose of the present invention is to propose a variable damping shock absorber as defined in the attached independent claim, capable of adjusting a damping itself according to an outside shock situation in a use process, thereby effectively absorbing shock and enhancing a shock absorbing effect. Further improvements are provided in the dependent claims.

Another purpose of the present invention is to propose a washing machine on which the variable damping shock absorber is arranged, so as to solve a problem of large shock in an operation process of the washing machine in an existing art.

To achieve the purpose, on one hand, the present invention adopts the following technical solution:
A variable damping shock absorber includes a housing and a piston rod arranged within the housing and capable of sliding along an inner wall of the housing. A first damping unit is fixedly arranged on the piston rod. The first damping unit moves with the piston rod and generates frictional force with the inner wall of the housing. An accommodating space is formed between a part of the piston rod and the inner wall of the housing. A second damping unit matched with the inner wall of the housing is arranged in the accommodating space. The second damping unit vertically moves along the inner wall of the housing, and generates frictional force with the inner wall of the housing.

When a stroke of the shock absorber is less than a preset value, the second damping unit is fixed relative to the inner wall of the housing.

When the stroke of the shock absorber is greater than the preset value, the second damping unit vertically moves along the inner wall of the housing.

Further, the piston rod has an upper supporting end and a lower supporting end. A rod body extends between the upper supporting end and the lower supporting end. The upper supporting end and the lower supporting end are arranged to protrude from the rod body so that the accommodating space is formed between the rod body and the inner wall of the housing.

A separating piece protruding from the rod body is also arranged on the rod body between the upper supporting end and the lower supporting end.

Further, the second damping unit is arranged between the upper supporting end and the separating piece.

When the stroke of the shock absorber is greater than the preset value, the second damping unit vertically moves along the inner wall of the housing under the pushing of the upper supporting end or the separating piece.

Further, the first damping unit is a damping ring.

The damping ring is fixedly arranged around an outer surface of the upper supporting end and comes into contact with the inner wall of the housing.

Further, the second damping unit includes a holding frame and a damping sleeve. The holding frame is a hollow structure that is not closed at an upper end and a lower end thereof.

The upper end and the lower end of the holding frame are bent 90° upwards and downwards respectively to form an upper bent part and a lower bent part.

A damping sleeve is arranged around an outer wall of the holding frame between the upper bent part and the lower bent part.

An interference fit is formed between the holding frame and the damping sleeve.

Further, the holding frame and the damping sleeve are separated structures.

The holding frame and the damping sleeve are divided into two parts of symmetry by a section that passes through its diameter along an axial direction.

Further, two parts of the holding frame are installed together to form a holding frame installing interface.

Two parts of the damping sleeve are installed together to form a damping sleeve installing interface.

The holding frame installing interface and the damping sleeve installing interface are arranged staggerly.

Preferably, a length M of the first damping unit is 5-25 mm.

Preferably, a length of the second damping unit is L=a^{∗}K,
wherein K is a length of the accommodating space and a is 0.2-0.8 mm.

On the other hand, the present invention adopts the following technical solution:
A washing machine on which the above variable damping shock absorber is arranged.

The present invention has beneficial effects as follows: the piston rod of the shock absorber in the present invention is provided with a first damping unit and a second damping unit. The first damping unit moves with the piston rod. The second damping unit is matched with the inner wall of the housing. When the stroke of the shock absorber is less than the preset value, the second damping unit is fixed relative to the inner wall of the housing, and when the stroke of the shock absorber is greater than the preset value, the second damping unit vertically moves along the inner wall of the housing. Since the shock absorber in the present invention has the above structure, the shock absorber can automatically adjust damping itself according to a size of shock suffered in a use process, thereby effectively absorbing shock and enhancing a shock absorbing effect.

The above shock absorber is arranged on the washing machine in the present invention, so as to adapt to various working conditions of the washing machine in the use process, thereby effectively relieving shock of the washing machine, reducing noise in a washing process of the washing machine and enhancing the user experience.

### BRIEF DESCRIPTION OF DRAWINGS

Fig. 1 is a half-sectional structural schematic diagram of a variable damping shock absorber according to the first embodiment of the present invention.
Fig. 2 is a front views of a piston rod according to the first embodiment of the present invention.
Fig. 3 is an exploded structural diagram of a second damping unit according to the first embodiment of the present invention.
Fig. 4 is an assembly structural diagram of a second damping unit according to the first embodiment of the present invention.

In the Figures:
1. housing 2. piston rod 21. upper supporting end 22. lower supporting end 23. rod body 24. separating piece 3. first damping unit 4. second damping unit 41. holding frame 42. damping sleeve

### DETAILED DESCRIPTION

The technical solution of the present invention will be further described below in combination with drawings and through specific embodiments.

### Embodiment 1

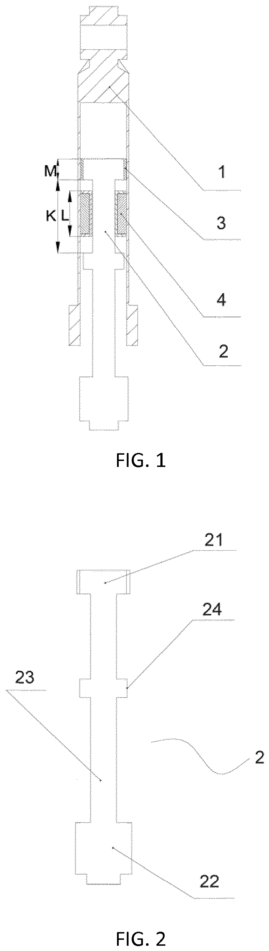

Fig. 1 shows a variable damping shock absorber according to the present embodiment, including a housing 1 and a piston rod 2 arranged in the housing 1 and capable of sliding along an inner wall of the housing 1. A first damping unit 3 is fixedly provided on the piston rod 2 . The first damping unit 3 moves with the piston rod 2 and generates frictional force with the inner wall of the housing 1. A second damping unit 4 is also provided on the piston rod 2.

An accommodating space is formed between a part of the piston rod 2 and the inner wall of the housing 1 in the present embodiment. A second damping unit 4 matched with the inner wall of the housing 1 is arranged in the accommodating space. The second damping unit 4 vertically moves along the inner wall of the housing 1, and generates frictional force with the inner wall of the housing 1. When the stroke of the shock absorber is less than the preset value, the second damping unit 4 is fixed relative to the inner wall of the housing 1, and when the stroke of the shock absorber is greater than the preset value, the second damping unit 4 vertically moves along the inner wall of the housing 1. The preset value of the stroke in the present embodiment is related to a structure of the piston rod 2, and can be designed according to a specific use condition of the shock absorber. In the present embodiment, a length M of the first damping unit 3 is 5-25 mm. Preferably, M is 10-15 mm. A length of the second damping unit 4 is L=a^{∗}K, wherein K is a length of the accommodating space and a is 0.2-0.8 mm. Preferably, a is 0.3-0.5 mm. The preset value is calculated in combination with actual conditions in the use process of the shock absorber and the above parameters.

As shown in Fig. 2, as a still further embodiment, the piston rod 2 has an upper supporting end 21 and a lower supporting end 22. A rod body 23 extends between the upper supporting end 21 and the lower supporting end 22. The upper supporting end 21 and the lower supporting end 22 are arranged to protrude from the rod body 23 so that the accommodating space is formed between the rod body 23 and the inner wall of the housing 1. A separating piece 24 protruding from the rod body 23 is also arranged on the rod body 23 between the upper supporting end 21 and the lower supporting end 22. The second damping unit 4 is arranged between the upper supporting end 21 and the separating piece 24. When the stroke of the shock absorber is greater than the preset value, the second damping unit 4 vertically moves along the inner wall of the housing 1 under the pushing of the upper supporting end 21 or the separating piece 24. In the present embodiment, the piston rod 2 is an integrally formed structure, wherein the separating piece 24, the upper supporting end 21, the lower supporting end 22 and the rod body 23 are integrally processed and formed.

Preferably, the first damping unit 3 in the present embodiment is a damping ring. The damping ring is fixedly arranged around an outer surface of the upper supporting end 21 and comes into contact with the inner wall of the housing 1.

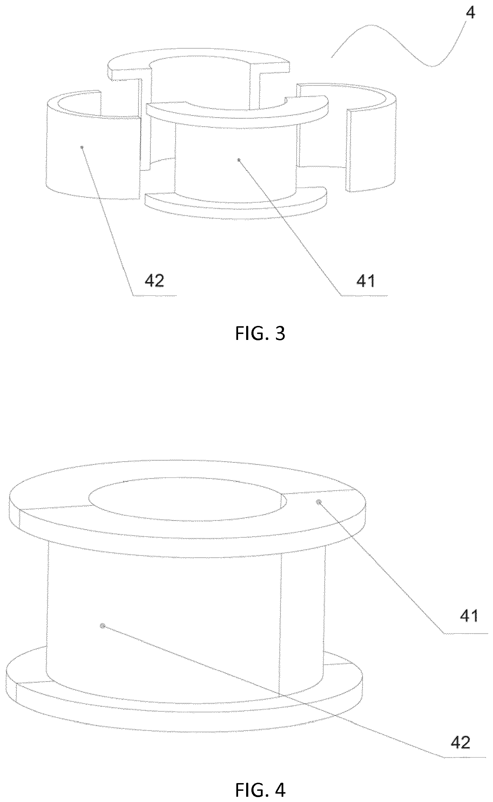

As shown in Fig. 3 and Fig. 4, the second damping unit 4 includes a holding frame 41 and a damping sleeve 42, and the holding frame 41 is a hollow structure that is not closed at an upper end and a lower end thereof. The upper end and the lower end of the holding frame 41 are bent 90° upwards and downwards respectively to form an upper bent part and a lower bent part. Therefore, a half section of the holding frame 41 along its axis presents an I-shaped structure. A damping sleeve 42 is arranged around an outer wall of the holding frame 41 between the upper bent part and the lower bent part. An interference fit is formed between the holding frame 41 and the damping sleeve 42. A half section of the damping sleeve 42 along its axis is rectangular.

The holding frame 41 and the damping sleeve 42 are separated structures. Preferably, the holding frame 41 and the damping sleeve 42 are divided into two parts of symmetry by a section that passes through its diameter along an axial direction. Two parts of the holding frame 41 are installed together to form a holding frame installing interface. Two parts of the damping sleeve 42 are installed together to form a damping sleeve installing interface. The holding frame installing interface and the damping sleeve installing interface are arranged staggerly.

Since the separating piece 24 is arranged on the piston rod 2 in the present embodiment, the holding frame 41 and the damping sleeve 42 of the second damping unit 4 are configured as separated structures for the convenience of installation. During installation, the holding frame 41 is firstly installed on the piston rod 2, and two parts of the holding frame 41 are aligned and buckled together and then closed. Then, the damping sleeve 42 is sleeved between the upper bent part and the lower bent part. After that, the two parts of the damping sleeve 42 are buckled together and are in close fit, so that the holding frame 41 and the damping sleeve 42 can move together.

Preferably, the first damping unit 3 and the second damping unit 4 in the present embodiment are made of high-density polyurethane or rubber, but not limited to above material.

Due to the above structure of the shock absorber in the present embodiment, the shock absorber can automatically adjust the damping itself according to a size of shock suffered in the use process, thereby effectively absorbing shock and enhancing a shock absorbing effect.

### Embodiment 2

The present embodiment proposes a washing machine on which the variable damping shock absorber described in embodiment 1 is arranged, so that the washing machine in the present embodiment can effectively relieve the shock generated in various washing procedures of the washing machine in the washing process, thereby reducing noise in the washing process of the washing machine and enhancing the user experience.

Technical principles of the present invention are described above in combination with the specific embodiments. These descriptions are only used to explain the principles of the present invention, and are not interpreted as limitations to a protection scope of the present invention in any way. Based on explanation herein, those skilled in the art can contemplate other specific embodiments of the present invention without contributing creative labor. These embodiments shall fall into the protection scope of the present invention.

## Claims

1. A variable damping shock absorber, comprising a housing (1) and a piston rod (2) arranged in the housing (1) and capable of sliding along an inner wall of the housing(1), a first damping unit (3) is fixedly arranged on the piston rod (2), the first damping unit (3) moves with the piston rod (2) and generates frictional force with the inner wall of the housing (1), wherein an accommodating space is formed between a part of the piston rod (2) and the inner wall of the housing (1), a second damping unit (4) matched with the inner wall of the housing (1) is arranged in the accommodating space, and the second damping unit (4) vertically moves along the inner wall of the housing (1), and generates frictional force with the inner wall of the housing (1),
when a stroke of the shock absorber is less than a preset value, the second damping unit (4) is fixed relative to the inner wall of the housing (1), and
when the stroke of the shock absorber is greater than the preset value, the second damping unit (4) vertically moves along the inner wall of the housing (1);
wherein the second damping unit (4) comprises a holding frame (41) and a damping sleeve (42), and the holding frame (41) is a hollow structure that is not closed at an upper end and a lower end,
the upper end and the lower end of the holding frame (41) are bent 90° upwards and downwards respectively to form an upper bent part and a lower bent part,
a damping sleeve (42) is arranged around an outer wall of the holding frame (41) between the upper bent part and the lower bent part (41), and
an interference fit is formed between the holding frame (41) and the damping sleeve, the holding frame (41) and the damping sleeve (42) are separated structures,
the variable damping shock absorber being **characterized in that** the holding frame (41) and the damping sleeve (42) are divided into two parts of symmetry by a section that passes through its diameter along an axial direction.

2. The variable damping shock absorber according to claim 1, wherein the piston rod (2) has an upper supporting end (21) and a lower supporting end (22), a rod body (23) extends between the upper supporting end (21) and the lower supporting end (22), and the upper supporting end (21) and the lower supporting end (22) are arranged to protrude from the rod body (23) so that the accommodating space is formed between the rod body (23) and the inner wall of the housing (1), and
a separating piece (24) protruding from the rod body (23) is also arranged on the rod body (23) between the upper supporting end (21) and the lower supporting end (22).

3. The variable damping shock absorber according to claim 2, wherein the second damping unit is arranged between the upper supporting end (21) and the separating piece (24),; and
when the stroke of the shock absorber is greater than the preset value, the second damping unit (4) vertically moves along the inner wall of the housing (1) under the pushing of the upper supporting end (21) or the separating piece (24).

4. The variable damping shock absorber according to claim 3, wherein the first damping unit is a damping ring, and
the damping ring is fixedly arranged around an outer surface of the upper supporting end (21) and comes into contact with the inner wall of the housing (1).

5. The variable damping shock absorber according to claim 1, wherein the two parts of the holding
frame (41) are installed together to form a holding frame installing interface, the two parts of the damping sleeve (42) are installed together to form a damping sleeve installing interface, and
the holding frame installing interface and the damping sleeve installing interface are arranged staggerly.

6. The variable damping shock absorber according to any one of claims 1-4, wherein a length M of the first damping unit (3) is 5-25 mm.

7. The variable damping shock absorber according to any one of claims 1-4, wherein a length of the second damping unit (4) is L=a^{∗}K,
wherein K is a length of the accommodating space and a is 0.2-0.8 mm.

8. A washing machine, wherein the washing machine is provided with the variable damping shock absorber according to any one of claims 1-7.

## Patentansprüche

1. Stoßdämpfer mit variabler Dämpfung, umfassend ein Gehäuse (1) und eine Kolbenstange (2), die in dem Gehäuse (1) angeordnet und in der Lage ist, entlang einer Innenwand des Gehäuses (1) zu gleiten, wobei eine erste Dämpfungseinheit (3) fest an der Kolbenstange (2) angeordnet ist, die erste Dämpfungseinheit (3) sich mit der Kolbenstange (2) bewegt und eine Reibungskraft mit der Innenwand des Gehäuses (1) erzeugt, wobei ein Aufnahmeraum zwischen einem Teil der Kolbenstange (2) und der Innenwand des Gehäuses (1) gebildet ist, eine zweite Dämpfungseinheit (4), die an die Innenwand des Gehäuses (1) angepasst ist, in dem Aufnahmeraum angeordnet ist, und die zweite Dämpfungseinheit (4) sich vertikal entlang der Innenwand des Gehäuses (1) bewegt und eine Reibungskraft mit der Innenwand des Gehäuses (1) erzeugt,
wenn ein Hub des Stoßdämpfers kleiner ist als ein voreingestellter Wert, die zweite Dämpfungseinheit (4) relativ zur Innenwand des Gehäuses (1) fixiert wird, und
wenn der Hub des Stoßdämpfers größer ist als der voreingestellte Wert, die zweite Dämpfungseinheit sich (4) vertikal entlang der Innenwand des Gehäuses (1) bewegt;
wobei die zweite Dämpfungseinheit (4) einen Halterahmen (41) und eine Dämpfungshülse (42) umfasst, und der Halterahmen (41) eine hohle Struktur ist, die an einem oberen Ende und einem unteren Ende nicht geschlossen ist,
das obere Ende und das untere Ende des Halterahmens (41) um 90° nach oben bzw. nach unten gebogen sind, um einen oberen gebogenen Teil und einen unteren gebogenen Teil zu bilden,
eine Dämpfungshülse (42) um eine Außenwand des Halterahmens (41) herum zwischen dem oberen gebogenen Teil und dem unteren gebogenen Teil (41) angeordnet ist, und
eine Presspassung zwischen dem Halterahmen (41) und der Dämpfungshülse gebildet ist,
der Halterahmen (41) und die Dämpfungshülse (42) getrennte Strukturen sind, wobei der Stoßdämpfer mit variabler Dämpfung **dadurch gekennzeichnet ist, dass**
der Halterahmen (41) und die Dämpfungshülse (42) in zwei symmetrische Teile unterteilt sind durch einen Abschnitt, der durch ihren Durchmesser entlang einer axialen Richtung verläuft.

2. Stoßdämpfer mit variabler Dämpfung nach Anspruch 1, wobei die Kolbenstange (2) ein oberes Abstützende (21) und ein unteres Abstützende (22) aufweist, ein Stangenkörper (23) sich zwischen dem oberen Abstützende (21) und dem unteren Abstützende (22) erstreckt, und das obere Abstützende (21) und das untere Abstützende (22) so angeordnet sind, dass sie aus dem Stangenkörper (23) vorstehen, so dass der Aufnahmeraum zwischen dem Stangenkörper (23) und der Innenwand des Gehäuses (1) gebildet wird, und
ein Trennstück (24), das aus dem Stangenkörper (23) vorsteht, ebenfalls am Stangenkörper (23) zwischen dem oberen Abstützende (21) und dem unteren Abstützende (22) angeordnet ist.

3. Stoßdämpfer mit variabler Dämpfung nach Anspruch 2, wobei die zweite Dämpfungseinheit zwischen dem oberen Abstützende (21) und dem Trennstück (24) angeordnet ist; und
wenn der Hub des Stoßdämpfers größer ist als der voreingestellte Wert, sich die zweite Dämpfungseinheit (4) vertikal entlang der Innenwand des Gehäuses (1) unter dem Schieben des oberen Abstützendes (21) oder des Trennstücks (24) bewegt.

4. Stoßdämpfer mit variabler Dämpfung nach Anspruch 3, wobei die erste Dämpfungseinheit ein Dämpfungsring ist, und
der Dämpfungsring um eine Außenoberfläche des oberen Abstützendes (21) herum fest angeordnet ist und mit der Innenwand des Gehäuses (1) in Kontakt kommt.

5. Stoßdämpfer mit variabler Dämpfung nach Anspruch 1, wobei die zwei Teile des Halterahmens (41) zusammen installiert sind, um eine Halterahmen-Installationsgrenzfläche zu bilden,
die zwei Teile der Dämpfungshülse (42) zusammen installiert sind, um eine Dämpfungshülse-Installationsgrenzfläche zu bilden, und
die Halterahmen-Installationsgrenzfläche und die Dämpfungshülse-Installationsgrenzfläche versetzt angeordnet sind.

6. Stoßdämpfer mit variabler Dämpfung nach einem der Ansprüche 1-4, wobei die Länge M der ersten Dämpfungseinheit (3) 5-25 mm beträgt.

7. Stoßdämpfer mit variabler Dämpfung nach einem der Ansprüche 1-4, wobei eine Länge der zweiten Dämpfungseinheit (4) L=a^{∗}K ist,
wobei K eine Länge des Aufnahmeraums ist und a 0,2-0,8 mm beträgt.

8. Waschmaschine, wobei die Waschmaschine mit dem Stoßdämpfer mit variabler Dämpfung nach einem der Ansprüche 1-7 ausgestattet ist.

## Revendications

1. Amortisseur à amortissement variable, comprenant un boîtier (1) et une tige de piston (2) agencée dans le boîtier (1) et pouvant coulisser le long d'une paroi interne du boîtier (1), une première unité d'amortissement (3) est agencée de manière fixe sur la tige de piston (2), la première unité d'amortissement (3) se déplace avec la tige de piston (2) et génère une force de friction avec la paroi interne du boîtier (1), dans lequel un espace de logement est formé entre une partie de la tige de piston (2) et la paroi interne du boîtier (1), une seconde unité d'amortissement (4) correspondant avec la paroi interne du boîtier (1) est agencée dans l'espace de logement, et la seconde unité d'amortissement (4) se déplace verticalement le long de la paroi interne du boîtier (1) et génère la force de friction avec la paroi interne du boîtier (1),
lorsqu'une course de l'amortisseur est inférieure à une valeur prédéterminée, la seconde unité d'amortissement (4) est fixe par rapport à la paroi interne du boîtier (1), et
lorsque la course de l'amortisseur est supérieure à la valeur prédéterminée, la seconde unité d'amortissement (4) se déplace verticalement le long de la paroi interne du boîtier (1) ;
dans lequel la seconde unité d'amortissement (4) comprend un bâti de maintien (41) et un manchon d'amortissement (42) et le bâti de maintien (41) est une structure creuse qui n'est pas fermée au niveau d'une extrémité supérieure et d'une extrémité inférieure,
l'extrémité supérieure et l'extrémité inférieure du bâti de maintien (41) sont courbées à 90° vers le haut et vers le bas respectivement afin de former une partie courbée supérieure et une partie courbée inférieure,
un manchon d'amortissement (42) est agencé autour d'une paroi externe du bâti de maintien (41) entre la partie courbée supérieure et la partie courbée inférieure (41), et
un ajustement avec serrage est formé entre le bâti de maintien (41) et le manchon d'amortissement,
le bâti de maintien (41) et le manchon d'amortissement (42) sont des structures séparées, l'amortisseur à amortissement variable étant **caractérisé en ce que** :
le bâti de maintien (41) et le manchon d'amortissement (42) sont divisés en deux parties de symétrie par une section qui passe à travers son diamètre le long d'une direction axiale.

2. Amortisseur à amortissement variable selon la revendication 1, dans lequel la tige de piston (2) a une extrémité de support supérieure (21) et une extrémité de support inférieure (22), un corps de tige (23) s'étend entre l'extrémité de support supérieure (21) et l'extrémité de support inférieure (22), et l'extrémité de support supérieure (21) et l'extrémité de support inférieure (22) sont agencées pour faire saillie du corps de tige (23) de sorte que l'espace de logement est formé entre le corps de tige (23) et la paroi interne du boîtier (1), et
une pièce de séparation (24) faisant saillie du corps de tige (23) est également agencée sur le corps de tige (23) entre l'extrémité de support supérieure (21) et l'extrémité de support inférieure (22).

3. Amortisseur à amortissement variable selon la revendication 2, dans lequel la seconde unité d'amortissement est agencée entre l'extrémité de support supérieure (21) et la pièce de séparation (24), et
lorsque la course de l'amortisseur est supérieure à la valeur prédéterminée, la seconde unité d'amortissement (4) se déplace verticalement le long de la paroi interne du boîtier (1) sous la poussée de l'extrémité de support supérieure (21) ou de la pièce de séparation (24).

4. Amortisseur à amortissement variable selon la revendication 3, dans lequel la première unité d'amortissement est une bague d'amortissement, et
la bague d'amortissement est agencée de manière fixe autour d'une surface externe de l'extrémité de support supérieure (21) et vient en contact avec la paroi interne du boîtier (1).

5. Amortisseur à amortissement variable selon la revendication 1, dans lequel les deux parties du bâti de maintien (41) sont installées ensemble afin de former une interface d'installation de bâti de maintien, les deux parties du manchon d'amortissement (42) sont installées ensemble afin de former une interface d'installation de manchon d'amortissement, et
l'interface d'installation de bâti de maintien et l'interface d'installation de manchon d'amortissement sont agencées en quinconce.

6. Amortisseur à amortissement variable selon l'une quelconque des revendications 1 à 4, dans lequel une longueur M de la première unité d'amortissement (3) est de 5 à 25 mm.

7. Amortisseur à amortissement variable selon l'une quelconque des revendications 1 à 4, dans lequel une longueur de la seconde unité d'amortissement (4) est L = a^{∗}K,
dans lequel K est une longueur de l'espace de logement et a est de 0,2 à 0,8 mm.

8. Machine à laver, dans laquelle la machine à laver est prévue avec un amortisseur à amortissement variable selon l'une quelconque des revendications 1 à 7.
